# EUROPEAN PATENT SPECIFICATION

(11) **EP 1 567 399 B1**
(45) Date of publication and mention of the grant of the patent: **20.06.2012**
(21) Application number: 03772999.3
(22) Date of filing: 13.11.2003
(51) Int. Cl.: B60T 8/00, B60T 8/32, B60W 30/14

(54) **METHOD AND APPARATUS FOR THE DISTRIBUTION OF BRAKE TORQUE ON A VEHICLE**
VERFAHREN UND VORRICHTUNG ZUR VERTEILUNG VOM BREMSDREHMOMENT AN EINEM FAHRZEUG
PROCEDE ET DISPOSITIF DE REPARTITION DU COUPLE DE FREINAGE SUR UN VEHICULE

(30) Priority: 26.11.2002 SE 0203498
(43) Date of publication of application: 31.08.2005
(73) Proprietor: VOLVO LASTVAGNAR AB, 405 08 Göteborg (SE)
(72) Inventor: LINGMAN, Peter, S-416 54 Göteborg (SE); ERIKSSON, Anders, S-413 20 Göteborg (SE); SABELSTRÖM, Mats, S-427 37 Billdal (SE); TERBORN, Bengt, S-424 70 Olofstorp (SE)
(74) Representative: Fröhling, Werner Otto
(86) International application number: PCT/SE2003/001764
(87) International publication number: WO 2004/048172

(56) References cited:
- EP-A2- 0 145 374
- WO-A1-01/49542
- WO-A1-94/10002
- DE-A1- 3 736 807
- US-A- 4 477 124
- US-A- 5 303 986

## Description

### TECHNICAL FIELD

The present invention relates to a method and an apparatus for distributing the brake torque between service brakes and auxiliary brakes in a vehicle, when the vehicle is driven with a cruise control function.

### BACKGROUND

It is known to arrange auxiliary brakes in a vehicle as a supplement to the service brakes of the vehicle. Auxiliary brakes are used mainly in heavy-duty vehicles for the primary purpose of sparing the service brakes of the vehicle, especially when driving on long downhill gradients when it is desirable to brake in order to maintain fairly constant speed. By making use of the auxiliary brakes, the service brakes can be preserved so that, when the vehicle really has to decelerate very strongly, they can deliver maximum braking force. The service brakes have a very much more powerful braking effect than auxiliary brakes, partly due to the fact that the service brakes are normally arranged on all the wheels on the vehicle. The auxiliary brakes normally act only on the driving wheels.

It is also known to differentiate between what are known as primary and secondary auxiliary brakes in a vehicle. Primary and secondary refer to the positioning of the auxiliary brake before or after the main gearbox of the vehicle. Examples of primary auxiliary brakes are ISGs (Integrated Starters and Generators) and retarders. A retarder is usually of the hydrodynamic retarder or electromagnetic retarder type. These are arranged between the engine and the main gearbox. A primary auxiliary brake can also consist of various types of engine brake, for example a compression brake, an exhaust-gas brake or the basic friction of the engine. The braking energy in a compression brake and an exhaust-gas brake is converted mainly to heat, which is to a great extent dissipated via the cooling system of the engine, but it should be noted that a considerable part (roughly 40% of the braking energy) accompanies the exhaust gases of the vehicle out through the exhaust system. The basic friction of the engine can be regulated by injecting a certain quantity of fuel into the engine so that output torque from the engine is, for example, zero. Here, another possibility is to disengage the engine from the rest of the drive line by means of a clutch arranged between the engine and the gearbox. Here and hereinafter, drive line means the engine of the vehicle and also transmission components coupled to the engine right out to the driving wheels. Other controllable units coupled to the engine which influence the braking force from the engine are, for example, the radiator fan of the engine, the air-conditioning unit of the vehicle, the compressed-air compressor and other auxiliary units coupled to the engine. The braking effect a primary auxiliary brake can deliver is dependent on the engine speed, for which reason it is advantageous to maintain a relatively high engine speed when a primary auxiliary brake is used.

A secondary auxiliary brake, which is arranged somewhere after the main gearbox of the vehicle, usually consists of a retarder of hydrodynamic or electromagnetic type. The braking effect a secondary auxiliary brake can deliver is dependent on the speed of the vehicle, because the auxiliary brake is mounted on the output shaft of the gearbox, and is therefore proportional to the speed of rotation of the driving wheels.

An auxiliary brake of the hydrodynamic retarder type usually consists of an impeller (rotor) and a turbine wheel (stator). The rotor is coupled firmly to, for example, the propeller shaft of the vehicle and rotates with it. The stator is arranged firmly in a retarder housing in which both the rotor and the stator are enclosed. The retarder housing is connected to a container for oil. When oil is pressed into the retarder housing, it is set in motion by the rotor which presses the oil against the stator. As the stator cannot rotate, retardation of the oil flow occurs. Braking of the rotor and the whole vehicle thus takes place. The brake torque is regulated by the quantity of oil in the retarder housing. The heat which arises when the oil brakes the rotor is usually dissipated via a heat exchanger coupled to the cooling system of the engine. This means that the retarder requires more cooling capacity from the cooling system of the engine compared with, for example, the abovementioned compression brake or exhaust-gas brake where a large part of the braking energy disappears directly out through the exhaust pipe. The maximum braking capacity of a retarder can usually be utilized only for shorter periods of time as the capacity of the cooling system is not sufficient.

An auxiliary brake of the electromagnetic retarder type usually consists of a stator in the form of electromagnets and a rotor in the form of soft-iron plates. The rotor is coupled to, for example, the propeller shaft of the vehicle, and the stator is mounted firmly in the vehicle. When current is supplied to the electromagnets, a braking torque arises on the rotor when it rotates. The braking energy is converted into heat on account of the eddy currents which are formed in the soft-iron plates. In the case of prolonged braking, the rotor heats up to such an extent that the formation of eddy currents decreases because the magnetic properties of the soft-iron plates are temperature-dependent, which leads to the braking capacity decreasing. In the case of prolonged use and maximum utilization of the capacity of the retarder, the braking capacity can in principle even disappear completely. The electromagnetic retarder is usually cooled by surrounding air.

When a vehicle is equipped with powerful auxiliary brakes, for example both primary and secondary auxiliary brakes or several of only the primary type, there is a great risk that the combined braking force will be so great that in certain situations some transmission components are subjected to stresses which exceed their maximum torque capacity. A method for controlling the auxiliary brake torque so that the drive line is not damaged is described in a parallel application.

There is moreover a great risk that the friction of the driving wheels against the roadway will not be sufficiently great in order to convey the entire brake torque down to the roadway without the wheels skidding. This can lead to both an extended braking distance for the vehicle and moreover abnormal tire wear where parts of the tires can be worm flat. Even when the friction of the driving wheels against the roadway is sufficiently great in order to convey the entire brake torque down to the roadway, this can result in unnecessarily great tire wear on the driving wheels when strong deceleration is required. A method for controlling the auxiliary brake torque so that tire wear is minimized is described in a parallel application.

US5921883 describes a method in which the brake torque from a compression brake is controlled as a function of the speed of the vehicle or the gear engaged for the purpose of not exceeding the torque capacity of a transmission component. This method does not take DE3637807 relates to a method according to the preamble of claim 1, in which is used a control device for a brake system of motor vehicle. An inclination sensor is connected to the control device in which an electronic device which assigns a maximum speed to at least one specifiable value or range of the measured angle of inclination, by means of which device a control signal which activates the vehicle brakes and/or an engine brake can be triggered when this maximum speed is exceeded. account of whether the braking force from the auxiliary brake is too great for the friction between the roadway and the driving wheels, that is to say that the vehicle starts to skid.

A common situation is that a driver tries to utilize auxiliary brakes as much as possible, on the one hand to spare brake linings and on the other hand to preserve the service brakes. An experienced driver can, with the aid of engine revolutions, speed, cooling water temperature and by looking at the gradient of the hill, utilize an auxiliary brake to maintain a relatively high speed on a downhill gradient without overheating the cooling system of the vehicle. Depending on whether the auxiliary brake is a primary and/or secondary retarder, the braking effect is also influenced by the engine speed and/or the speed of rotation of the driving wheels.

This can give a relatively high speed when the vehicle is equipped with a retarder. With only an engine brake, the driver has to maintain a considerably lower speed in order to ensure that the braking effect is sufficient for keeping the vehicle at a constant speed. There are also occasions when the braking effect delivered by, for example, a primary and a secondary auxiliary brake is not sufficient, for example when the cooling water is too hot. Another occasion when the braking effect from a secondary auxiliary brake is not sufficient is when the vehicle is driven at low speed, for example on a curving road. On these occasions, it would be desirable for it to be possible to increase the braking effect. This can be done by utilizing the service brakes of the vehicle in a controlled way in order to increase the braking effect of the auxiliary brakes.

There is therefore a need for it to be possible to distribute the brake torque between service brakes and auxiliary brakes in a vehicle in a way which makes it possible to maximize the speed of the vehicle. This is the main object of the invention described below.

### SUMMARY OF THE INVENTION

The object of the invention is therefore to provide a method and an apparatus for distributing the brake torque between service brakes and auxiliary brakes in a vehicle when the vehicle is driven with a cruise control function.

The solution according to the invention for achieving this object is described in the characterizing part of patent claim 1 as far as the method is concerned and in the characterizing part of patent claim 11 as far as the apparatus is concerned. The other patent claims contain advantageous designs and developments of the method according to the invention and the apparatus according to the invention.

With a method for distributing the brake torque between at least a first and a second braking device on a motor vehicle comprising at least two wheel pairs, where the first braking device is a friction brake which acts on at least one wheel pair and where the second braking device acts on at least one driven wheel pair, the object is achieved by virtue of the fact that the distribution of brake torque between the first braking device and the second braking device takes account of brake torque required and also the maximum brake torque the first braking device and the second braking device can deliver when the vehicle is driven with a cruise control function.

The apparatus according to the invention achieves the object by distributing the brake torque between service brakes and auxiliary brakes on a motor vehicle so that a maximum speed is achieved when the vehicle is driven on a downhill gradient.

By means of the method according to the invention, the brake torque is distributed between service brakes and auxiliary brakes on a motor vehicle automatically by account being taken of brake torque required and the maximum brake torque the first braking device and the second braking device can deliver when the vehicle is driven with a cruise control function. The advantage of this method is that the total braking performance of the vehicle can be increased without the vehicle having to be fitted with extra equipment and without the safety margins being reduced.

In a first development of the method according to the invention, the distribution of brake torque takes place so that the speed of the vehicle is maximized. The advantage of this is that a higher average speed is achieved.

In a second development of the method according to the invention, the distribution of brake torque takes account of the temperature of the service brakes. The advantage of this is that a sufficient safety level is ensured in all braking situations.

In a third development of the method according to the invention, the method selects gear on the vehicle. The advantage of this is to optimize the braking effect of the auxiliary brakes.

In a fourth development of the method according to the invention, the method predicts the brake torque requirement by, for example, using an electronic map and/or GPS. The advantage of this is that a higher average speed is achieved.

By means of the apparatus according to the invention, a control unit distributes the brake torque automatically between service brakes and auxiliary brakes on a motor vehicle so that a maximum speed is achieved when the vehicle is driven on a downhill gradient. The advantage of this apparatus is that the speed of the vehicle when it is driven on a downward gradient can be increased without the safety margins being reduced.

### BRIEF DESCRIPTION OF FIGURES

The invention will be described in greater detail below with reference to illustrative embodiments shown in the accompanying drawings, in which
- FIG 1: shows a diagrammatic vehicle with braking devices according to the invention, and
- FIG 2: shows a graph where the relationship between road gradient, vehicle speed and brake torque distribution is illustrated.

### DESCRIPTION OF ILLUSTRATIVE EMBODIMENTS

The illustrative embodiments of the invention described below with developments are to be seen only as examples and are in no way to be limiting of the scope of protection of the patent claims. In the illustrative embodiments described here, disk brakes are used as an example of service brakes. It is understood that the illustrative embodiments also apply to drum brakes. Furthermore, the designation wheel axle is not only used for a physical, continuous axle but also applies to wheels which are located on a geometric axis, even though the wheels are individually suspended.

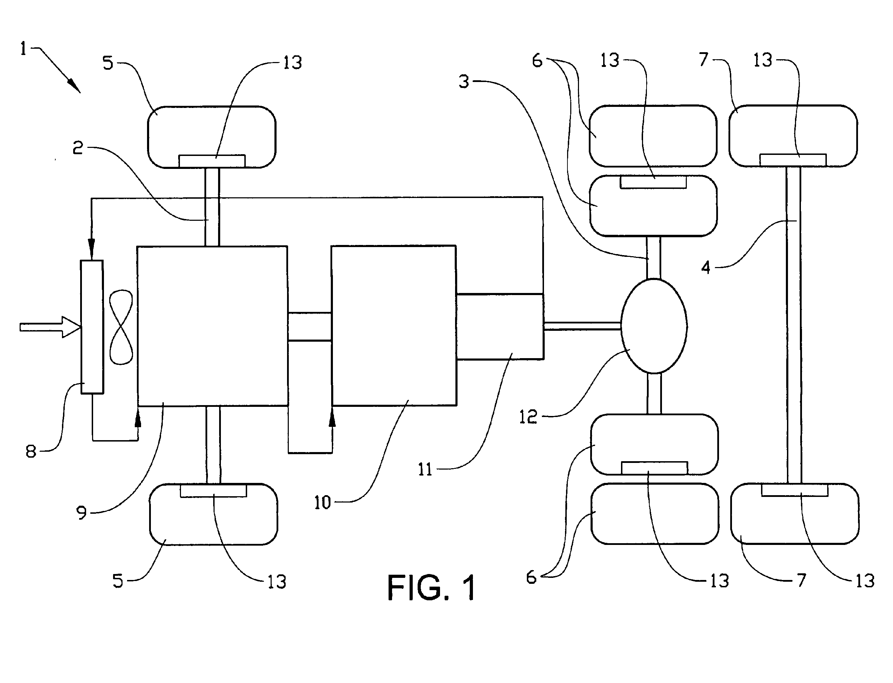

Fig. 1 shows diagrammatically a vehicle 1 with a front wheel axle 2, a first rear wheel axle 3 and a second rear wheel axle 4. Mounted on the front wheel axle 2 is a front wheel pair 5 which steers the vehicle. A first rear wheel pair 6 is mounted on the first rear wheel axle 3, which is also the driving axle of the vehicle. Here, the first rear wheel pair 6 consists of what is known as a twin mounting, that is to say two wheels on each side of the driving axle. The second rear wheel pair 7 is mounted on the second rear wheel axle 4, which is a raisable axle which is used for heavy load. Each wheel consists of a tire mounted on a rim.

Each side of a wheel axle is equipped with a service brake 13, here in the form of compressed-air-fed disk brakes. The service brakes are controlled electronically with the aid of an electronic control unit (ECU) comprising inter alia a computer (not shown). The service brakes can be controlled individually, for example in order to make possible active stabilization control (ESP = Electronic Stability Program). The vehicle also comprises a radiator 8, an engine 9 with an auxiliary brake in the form of a compression brake (VEB = Volvo Engine Brake), a gearbox 10, a hydraulic auxiliary brake in the form of a retarder (CR = Compact Retarder) 11 and a final gear 12. These components are well-known to the expert and are not described further.

A driver normally tries to utilize the auxiliary brakes as much as possible, especially on longer downhill gradients. A common driving strategy is to maintain a uniform speed of the vehicle using the auxiliary brakes and to use the service brakes only in order to achieve the speed at which the auxiliary brakes can maintain a uniform speed. The reason for this is on the one hand that the driver does not want to wear brake disks and brake linings and on the other hand that the driver does not know how hot the service brakes are and therefore wants to be on the safe side as far as heat fading is concerned, that is to say the fact that the braking capacity of the service brakes decreases with increased temperature. This strategy results in the braking effect of the auxiliary brakes being utilized to the maximum, but at the same time the braking effect of the service brakes is not used at all. This means that the entire brake torque which brakes the vehicle has to be taken up by the wheels/tires on the driving axle, which in turn leads to the wear on these tires increasing disproportionately. At the same time, it must be ensured that the brake torque does not exceed the maximum permitted torque the drive line can handle.

In order to optimize the available brake torque, it is therefore advantageous to use both auxiliary brakes and service brakes and to distribute the brake torque between these braking devices in a suitable way. The distribution of brake torque can be carried out in different ways.

In a first illustrative embodiment of the method according to the invention, the distribution of brake torque between auxiliary brakes and service brakes takes place by account being taken of the maximum brake torque the braking devices can deliver.

In this example, the brake torque required is first compared with the maximum brake torque the auxiliary brakes can deliver on a given occasion. As the brake torque the auxiliary brakes can deliver is dependent on inter alia engine speed and vehicle speed, at the same time as the drive line sets an upper limit for the maximum permitted brake torque, this comparison has to be made continuously in order to ensure that the brake torque required is delivered at the same time as the drive line is not overloaded. If the auxiliary brakes can deliver the brake torque required, the ECU ensures that all brake torque is distributed to the auxiliary brakes. If the auxiliary brakes cannot deliver the brake torque required, the ECU distributes that part of the brake torque required which the auxiliary brakes cannot deliver to the service brakes. The distribution of brake torque can of course also be carried out in other ways; for example, the service brakes can be brought into use when 90% of the brake torque of the auxiliary brakes has been reached. The braking effect of the service brakes should advantageously be adapted for each wheel axle, because the service brakes act on all the wheels while the auxiliary brakes act only on the driving axle. So as not to lock the wheels on the driving axle, the service brakes on the driving axle can therefore be activated with a lower braking force than the service brakes which act on non-driven axles.

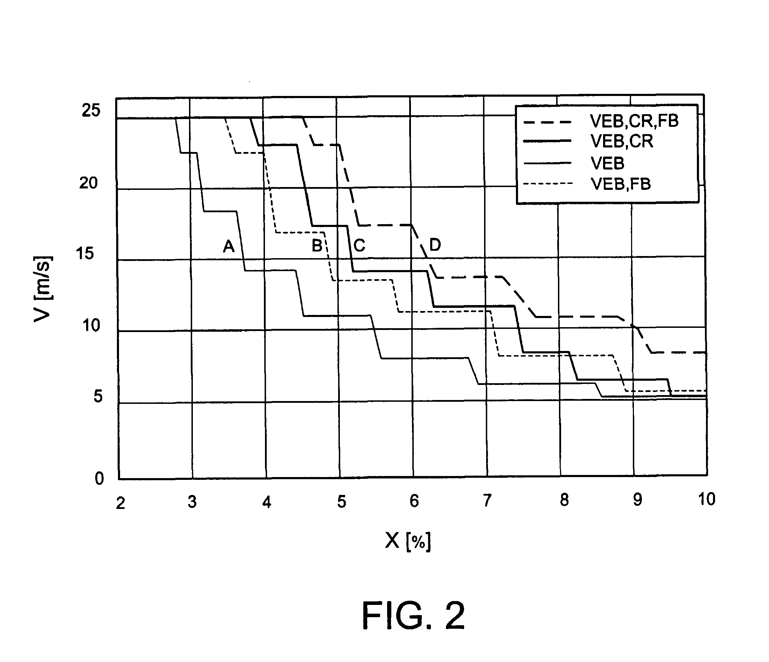

Fig. 2 shows how the maximum speed is influenced by the distribution of brake torque between auxiliary brake and service brake in the case of different road gradients in a fixed driving situation with a given vehicle combination. In this example, the vehicle combination weighs 60 tons, it has 6 axles, that is to say a truck with three axles and a trailer with three axles. The engine speed of the vehicle is 2200 rpm, the temperature of the brake disks is allowed to be 500°C, and the driving situation is continuous, that is to say the vehicle is driven at a uniform speed with a cruise control function. The retarder is allowed to disengage when the cooling system becomes too hot.

The x-axis shows the road gradient in %, the y-axis shows the speed v of the vehicle in m/s. The curves show different combinations of braking devices. In curve A, the vehicle is braked using a compression brake VEB. In curve B, the vehicle is braked using a VEB and the service brakes. In curve C, the vehicle is braked using a VEB and a retarder. In curve D, the vehicle is braked using a VEB, a retarder and the service brakes. In Fig. 2, it can be seen clearly that the maximum speed at which the vehicle can be driven increases significantly when the auxiliary brakes are supplemented by the service brakes.

It is moreover clear that for a vehicle where a VEB is combined with service brakes (curve B), an on the whole equivalent braking effect is obtained to that for a vehicle with a VEB and a retarder (curve C). This is advantageous for vehicles which require increased braking performance only occasionally but where it is not economically justifiable, for example due to cost and/or weight, to equip the vehicle with a retarder.

Fig. 2 also shows that the braking effect for a retarder decreases at lower speeds. This can be seen from a comparison of the curves A and C. For a vehicle which is driven at low speed, for example on a steep curving road, it is therefore advantageous to distribute the brake torque between auxiliary brakes and service brakes in order to obtain increased braking performance.

The steps in the curves in Fig. 2 are due to the fact that the braking effect of the compression brake (VEB) is dependent on engine speed. At each step, the gearbox has been shifted down a stage in order to increase the speed of the engine and thus increase the braking effect of the compression brake. It is therefore advantageous for the gearbox used to be an electronically controlled gearbox so that an engine speed can be selected at which the braking effect is as high as possible.

In a second illustrative embodiment of the method according to the invention, the distribution of brake torque between auxiliary brakes and service brakes takes place by account being taken of the temperature of the service brakes. The temperature of each brake disk is measured by a suitable sensor or is estimated using a suitable algorithm. Depending on the temperature, the distribution of brake torque is adapted in order to avoid heat fading of the service brakes and in order to guarantee braking capacity for emergency braking. The temperature of a brake disk can be allowed to rise to, for example, 500°C before the braking force is reduced.

In these illustrative embodiments, use is made of a calculation model in order to optimize the distribution of brake torque. This calculation model has inter alia the instantaneous road gradient as an input parameter. When the gradient of the road changes while driving downhill, the control unit recalculates the brake torque distribution. Adequate safety margins must then of course be included in the calculation model so that the vehicle can always be braked to a standstill in an emergency situation.

In a development, use is made of the actual gradient as an input parameter. This can be done by using GPS and/or an electronic map in order to obtain the current position of the vehicle. With a map containing road profile and road gradient, the whole of the coming road gradient and road gradient changes can be used in order to determine the total brake torque requirement and thus an optimum distribution of brake torque between the auxiliary brakes and the service brakes. Here, a certain overspeed can be allowed in order to minimize the necessary braking.

In a first illustrative embodiment of the apparatus according to the invention, the apparatus comprises an electronic control unit (not shown) which provides control signals to the braking devices. Depending on the brake torque required, the brake torque is distributed between one or more auxiliary brakes acting on the driving axle and the service brakes which act on all the wheel axles. The exact distribution of the brake torque between the auxiliary brake and the service brake depends on which optimization algorithm is used. In this illustrative embodiment, the distribution is optimized so that the speed of the vehicle is maximized.

In order to optimize the distribution in a desired way, the control unit receives various input signals from the vehicle. Depending on the optimization algorithm, a number of different input parameters can be used. These can be one or more of the following: speed of the vehicle, acceleration of the vehicle, brake torque required, instantaneous brake torque, instantaneous retarder torque, weight of the vehicle, axle load, gradient of the roadway, retarder temperature, cooling water temperature, temperature of brake lining/brake disk/brake drum, atmospheric temperature, position of the vehicle. In the case of a vehicle combination consisting of a traction vehicle and a trailer, trailer-specific parameters can also be used in the calculation algorithm.

The invention is not to be regarded as being limited to the illustrative embodiments described above, but a number of further variants and modifications are conceivable within the scope of the patent claims below. For example, it is also possible to distribute the brake torque between a traction vehicle and a trailer by taking account of the temperature of the braking devices of the trailer. This can be advantageous, for example, when the traction vehicle and the trailer have different brake linings.

## Claims

1. A method for cruise control of a vehicle driven on a downhill gradient, said method includes the steps of distributing brake torque between at least a first and a second braking device on a motor vehicle comprising at least two wheel pairs, where the first braking device is a friction brake which acts on at least one wheel pair and where the second braking device acts on at least one driven wheel pair, **characterized in that** the distribution of brake torque between the first braking device and the second braking device takes account of brake torque required to maintain a maximum speed of the vehicle for a given safety margin to ensure that a braking effect is sufficient when said vehicle is driven on a downhill gradient and also the maximum brake torque the first braking device and the second braking device can deliver, and **in that** the distribution of brake torque takes place when the vehicle is driven with a cruise control function.

2. The method as claimed in claim 1, **characterized in that** the distribution of brake torque between the first braking device and the second braking device is carried out so that the brake torque of the second braking device is utilized completely before the first braking device starts to deliver brake torque.

3. The method as claimed in any one of claims 1 or 2, **characterized in that** account is taken of the temperature of the first braking device.

4. The method as claimed in any one of claims 1 to 3, **characterized in that** the braking force of the first braking device is reduced when its temperature exceeds a predefined value.

5. The method as claimed in any one of claims 1 to 4, **characterized in that** the method comprises the step of adjusting the speed of the engine in order to optimize the braking effect of said second braking device.

6. The method as claimed in any one of claims 1 to 5, **characterized in that** the method comprises the step of selecting gear in order to optimize the braking effect of said second braking device.

7. The method as claimed in any one of claims 1 to 6, **characterized in that** the first braking device is a service brake, and **in that** the second braking device is at least one auxiliary brake.

8. The method as claimed in any one of claims 1 to 7, **characterized in that** input parameters for the method are one or more of: speed of the vehicle, acceleration of the vehicle, brake torque required, instantaneous brake torque, instantaneous retarder torque, weight of the vehicle, axle load, gradient of the roadway, retarder temperature, cooling water temperature, temperature of brake lining/brake disk/brake drum, atmospheric temperature, position of the vehicle.

9. The method as claimed in any one of claims 1 to 8, **characterized in that** the method comprises the step of predicting the brake torque requirement by taking account of stored information, for example via GPS and/or an electronic map, about the route lying ahead of the vehicle.

10. A computer program comprising a program code for carrying out the method as claimed in any one of claims 1 to 9 when said program is executed by a computer.

11. A computer program product comprising a program code stored on a computer-readable medium for carrying out the method as claimed in any one of claims 1 to 9 when said program is executed by a computer.

## Patentansprüche

1. Verfahren für eine Tempomatsteuerung eines auf einer Abwärtsneigung fahrenden Fahrzeugs, wobei das Verfahren den Schritt umfasst, dass ein Bremsmoment zwischen wenigstens einer ersten und einer zweiten Bremsvorrichtung an einem Kraftfahrzeug mit wenigstens zwei Radpaaren verteilt wird, wobei die erste Bremsvorrichtung eine Reibungsbremse ist, die auf wenigstens ein Radpaar wirkt, und wobei die zweite Bremsvorrichtung auf wenigstens ein angetriebenes Radpaar wirkt,
**dadurch gekennzeichnet, dass** die Verteilung des Bremsmoments zwischen der ersten Bremsvorrichtung und der zweiten Bremsvorrichtung für eine gegebene Sicherheitsreserve das Bremsmoment berücksichtigt, das zur Aufrechterhaltung einer maximalen Geschwindigkeit des Fahrzeugs erforderlich ist, um sicherzustellen, dass eine Bremswirkung ausreichend ist, wenn das Fahrzeug auf einer Abwärtsneigung gefahren wird, und außerdem das maximale Bremsmoment berücksichtigt, dass die erste Bremsvorrichtung und die zweite Bremsvorrichtung liefern kann, und dass die Verteilung des Bremsmoments stattfindet, wenn das Fahrzeug mit einer Tempomatsteuerfunktion gefahren wird.

2. Verfahren nach Anspruch 1, **dadurch gekennzeichnet, dass** die Verteilung des Bremsmoments zwischen der ersten Bremsvorrichtung und der zweiten Bremsvorrichtung so durchgeführt wird, dass das Bremsmoment der zweiten Bremsvorrichtung vollständig verwendet wird, bevor die erste Bremsvorrichtung beginnt, ein Bremsmoment zu liefern.

3. Verfahren nach irgendeinem der Ansprüche 1 oder 2, **dadurch gekennzeichnet, dass** die Temperatur der ersten Bremsvorrichtung berücksichtigt wird.

4. Verfahren nach irgendeinem der Ansprüche 1 bis 3, **dadurch gekennzeichnet, dass** die Bremskraft der ersten Bremsvorrichtung reduziert wird, wenn ihre Temperatur einen vorherbestimmten Wert überschreitet.

5. Verfahren nach irgendeinem der Ansprüche 1 bis 4, **dadurch gekennzeichnet, dass** das Verfahren den Schritt umfasst, dass die Drehzahl des Motors eingestellt wird, um die Bremswirkung der zweiten Bremsvorrichtung zu optimieren.

6. Verfahren nach irgendeinem der Ansprüche 1 bis 5, **dadurch gekennzeichnet, dass** das Verfahren den Schritt umfasst, dass ein Gang gewählt wird, um die Bremswirkung der zweiten Bremsvorrichtung zu optimieren.

7. Verfahren nach irgendeinem der Ansprüche 1 bis 6, **dadurch gekennzeichnet, dass** die erste Bremsvorrichtung eine Betriebsbremse ist und dass die zweite Bremsvorrichtung wenigstens eine Hilfsbremse ist.

8. Verfahren nach irgendeinem der Ansprüche 1 bis 7, **dadurch gekennzeichnet, dass** die Eingangsparameter für das Verfahren einer oder mehrere sind von: Geschwindigkeit des Fahrzeugs, Beschleunigung des Fahrzeugs, erforderliches Bremsdrehmoment, momentanes Bremsmoment, momentanes Retardermoment, Gewicht des Fahrzeugs, Achslast, Neigung der Straße, Retardertemperatur, Kühlwassertemperatur, Temperatur des Bremsbelags/der Bremsscheibe/der Bremstrommel, Umgebungstemperatur, Position des Fahrzeugs.

9. Verfahren nach irgendeinem der Ansprüche 1 bis 8, **dadurch gekennzeichnet, dass** das Verfahren den Schritt umfasst, dass die Bremsmomentanforderung vorhergesagt wird, indem gespeicherte Informationen, beispielsweise über GPS und/oder eine elektronische Karte, über die Route berücksichtigt werden, die vor dem Fahrzeug liegt.

10. Computerprogramm mit einem Programmcode zur Durchführung des Verfahrens nach einem der Ansprüche 1 bis 9, wenn das Programm durch einen Computer ausgeführt wird.

11. Computerprogrammerzeugnis mit einem Programmcode, der auf einem computerlesbaren Medium zur Durchführung des Verfahrens nach einem der Ansprüche 1 bis 9 gespeichert ist, wenn das Programm durch einen Computer ausgeführt wird.

## Revendications

1. Procédé de commande de la vitesse de croisière d'un véhicule entraîné sur une pente descendante, le procédé comprenant les étapes consistant à répartir un couple de freinage entre au moins un premier et un second dispositif de freinage situés sur un véhicule à moteur comprenant au moins deux paires de roues, où le premier dispositif de freinage est un frein à friction qui agit sur au moins une paire de roues et où le second dispositif de freinage agit sur au moins une paire de roues entraînées, **caractérisé en ce que** la répartition du couple de freinage entre le premier dispositif de freinage et le second dispositif de freinage prend en compte le couple de freinage requis pour maintenir une vitesse maximum du véhicule pour une marge de sécurité donnée pour assurer que l'effet de freinage est suffisant lorsque le véhicule est entraîné sur une pente descendante, et aussi le couple de freinage maximum que le premier dispositif de freinage et le second dispositif de freinage peuvent fournir, et **en ce que** la répartition du couple de freinage a lieu lorsque le véhicule est entraîné avec une fonction de commande de vitesse de croisière.

2. Procédé selon la revendication 1, **caractérisé en ce que** la répartition du couple de freinage entre le premier dispositif de freinage et le second dispositif de freinage est effectuée de sorte que le couple de freinage du second dispositif de freinage est entièrement utilisé avant que le premier dispositif de freinage ne commence à délivrer un couple de freinage.

3. Procédé selon l'une quelconque des revendications 1 ou 2, **caractérisé en ce que** la température du premier dispositif de freinage est prise compte.

4. Procédé selon l'une quelconque des revendications 1 à 3, **caractérisé en ce que** la force de freinage du premier dispositif de freinage est réduite lorsque sa température dépasse une valeur prédéfinie.

5. Procédé selon l'une quelconque des revendications 1 à 4, **caractérisé en ce que** le procédé comprend l'étape consistant à ajuster la vitesse du moteur afin d'optimiser l'effet de freinage du second dispositif de freinage.

6. Procédé selon l'une quelconque des revendications 1 à 5, **caractérisé en ce que** le procédé comprend l'étape consistant à sélectionner une vitesse afin d'optimiser l'effet de freinage du second dispositif de freinage.

7. Procédé selon l'une quelconque des revendications 1 à 6, **caractérisé en ce que** le premier dispositif de freinage est un frein au pied, et **en ce que** le second dispositif de freinage est au moins un frein auxiliaire.

8. Procédé selon l'une quelconque des revendications 1 à 7, **caractérisé en ce que** des paramètres d'entrée pour le procédé sont un ou plusieurs paramètres parmi : la vitesse du véhicule, l'accélération du véhicule, le couple de freinage requis, le couple de freinage instantané, le couple de ralentisseur instantané, le poids du véhicule, la charge par essieu, le gradient de la route, la température du ralentisseur, la température de l'eau de refroidissement, la température de la garniture de frein/du disque de frein/du tambour de frein, la température atmosphérique, la position du véhicule.

9. Procédé selon l'une quelconque des revendications 1 à 8, **caractérisé en ce que** le procédé comprend l'étape consistant à prévoir le besoin de couple de freinage en prenant en compte des informations mémorisées, par exemple par l'intermédiaire d'un système GPS et/ou d'une carte électronique, concernant la route se trouvant en avant du véhicule.

10. Programme d'ordinateur comprenant un code de programme pour effectuer le procédé selon l'une quelconque des revendications 1 à 9 lorsque le programme est exécuté par un ordinateur.

11. Produit de programme d'ordinateur comprenant un code de programme mémorisé sur un support pouvant être lu par ordinateur pour mettre en oeuvre le procédé selon l'une quelconque des revendications 1 à 9 lorsque le programme est exécuté par un ordinateur.
